Europäisches Patentamt

European Patent Office

Office européen des brevets

(11) Publication number:
# 0 296 853
# A2

# EUROPEAN PATENT APPLICATION

(21) Application number: 88305730.9

(22) Date of filing: 23.06.88

(51) Int. Cl.4: **A21C 9/04**

(30) Priority: 24.06.87 GB 8714847

(43) Date of publication of application:
**28.12.88 Bulletin 88/52**

(84) Designated Contracting States:
**DE FR GB NL**

(71) Applicant: **Hartley, Richard Melloden
'Cyclotex' Summerstown Marsh Gibbon
Bicester Oxon OX6 0AW(GB)**

(72) Inventor: **Hartley, Richard Melloden
'Cyclotex' Summerstown Marsh Gibbon
Bicester Oxon OX6 0AW(GB)**

(74) Representative: **Rock, Olaf Colin
Trelawn
Cassington Oxford OX8 1 DN(GB)**

(54) Method and apparatus for food preparation.

(57) A work station (11) for use in conjunction with a conveyer (12) to enable an edible substrate (W) presented to the work station (11) by way of the conveyer (12) to be coated with a deposition of a secondary material comprises: a reservoir (13) for the secondary material; a level regulator (15) for maintaining a constant head of the secondary material in the reservoir (13); a first rotatable member (18) juxtaposed with the reservoir (13) so as to be able to entrain secondary material therefrom; and a second rotatable member (24) adapted to receive secondary material initially entrained by the first member (18) and adapted for juxtaposition with a conveyer (12) so that a substrate (W) in passing the second rotatable member (24) has secondary material transferred to it by way of the second rotating member (24). For optimising positioning and transfer of secondary material at least one further rotatable member (30) can be provided intermediate the first and second rotatable members (18, 24).

Fig 2

## METHOD AND APPARATUS FOR FOOD PREPARATION

This invention relates to method and apparatus for food preparation. In particular it is concerned with the coating of an edible substrate with a secondary material.

For depositing a layer of secondary material on a substrate, such as bread, it is known to pass the substrate through a spray of coating material or to use an injector to deposit coating material. A spray arrangement involves spray nozzles which can be blocked by, for example, crumbs and the possibility of spray on surrounding areas. An injector arrangement involves a relatively elaborate installation both from the point of view of loading the injector and in actuating it. In this latter case the inertia of the arrangement tends to impose an upper limit to the speed of operation and so on the throughput of coated items.

According to a first aspect of the present invention there is provided a method of coating an edible substrate material with a deposition of secondary material comprising:

a) traversing the substrate, such as by means of a conveyer, past a workstation;

b) providing a reservoir of liquid secondary material;

c) maintaining a constant head of secondary material in the reservoir;

d) drawing secondary material from the reservoir by means of a first rotating member;

e) transferring material from the first rotating member to a second rotating member at the workstation;

f) juxtaposing the second rotating member with a substrate as it passes the workstation so as to cause the transfer of secondary material from the second rotating member to the substrate.

Typically the method according to the first aspect is characterised in that the step of transferring material from the first rotating member to a second rotating member is undertaken by way of at least one further rotating member.

According to a second aspect of the present invention there is provided a workstation for use in conjunction with a conveyer to enable an edible substrate presented to the workstation by way of the conveyer to be coated with a deposition of a secondary material characterised by:

a) a reservoir for liquid secondary material;

b) a level regulator for maintaining a constant head of the secondary material in the reservoir;

c) a first rotatable member juxtaposed with the reservoir so as to be able to entrain secondary material therefrom;

d) a second rotatable member adapted to receive secondary material initially entrained by the first member;

e) the second rotatable member being adapted for juxtaposition with a conveyer so that a substrate in passing the second rotatable member has secondary material transferred to it by way of the second rotating member.

According to a first preferred form of the second aspect of the present invention the workstation is characterised in that the transfer of secondary material from the first to the second rotatable member is by way of at least one intermediate means such as a further rotatable member to enable the optimal location firstly of the first such member relative to the reservoir and secondly of the second rotatable member relative to a path of a substrate to receive secondary material from the second rotatable member.

According to a second preferred form of the second aspect of the present invention or the first preferred form thereof the workstation is characterised by a speed control whereby the linear peripheral speed of the second rotatable member can be varied relative to the linear speed of a substrate passing it between a first value where the linear speed of the second member is less than that of the linear speed of the substrate and a second value where the linear speed is greater than that of the substrate.

According to a third aspect of the present invention there is provided a coating system comprising a conveyer for substrates for coating and a workstation to enable substrates on the conveyer to be coated characterised by a workstation according to the second aspect or any preferred form thereof.

Reference to a liquid secondary material should be taken to include not only a homogeneous liquid (which could be a mixture of miscible liquids) but also a non-homogenous liquid, which include a mixture of liquids having a constituent which separates on standing; and a single liquid, or a mixture thereof, incorporating a particulate material.

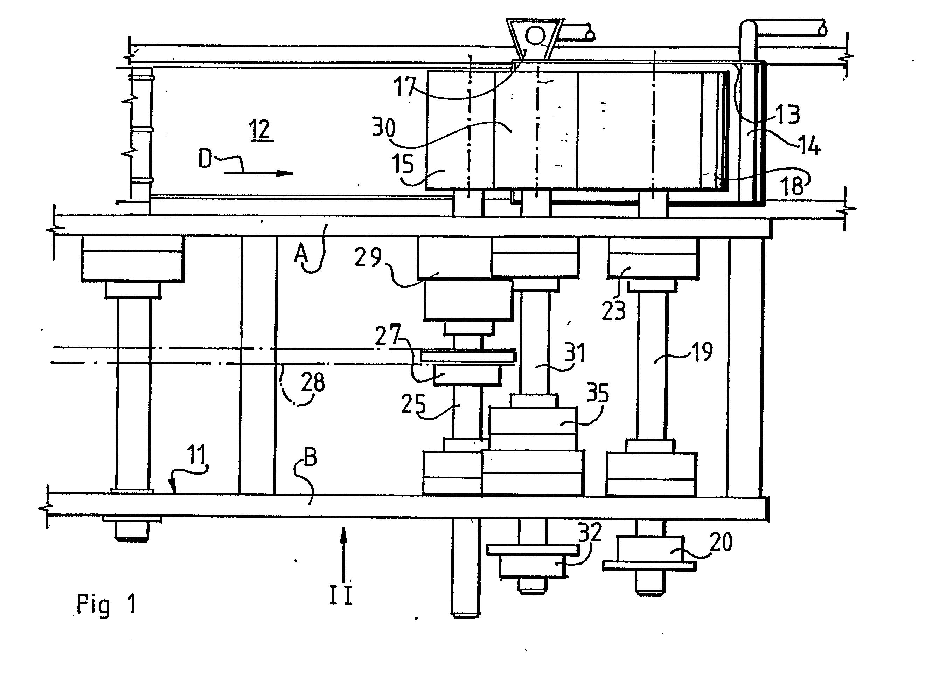

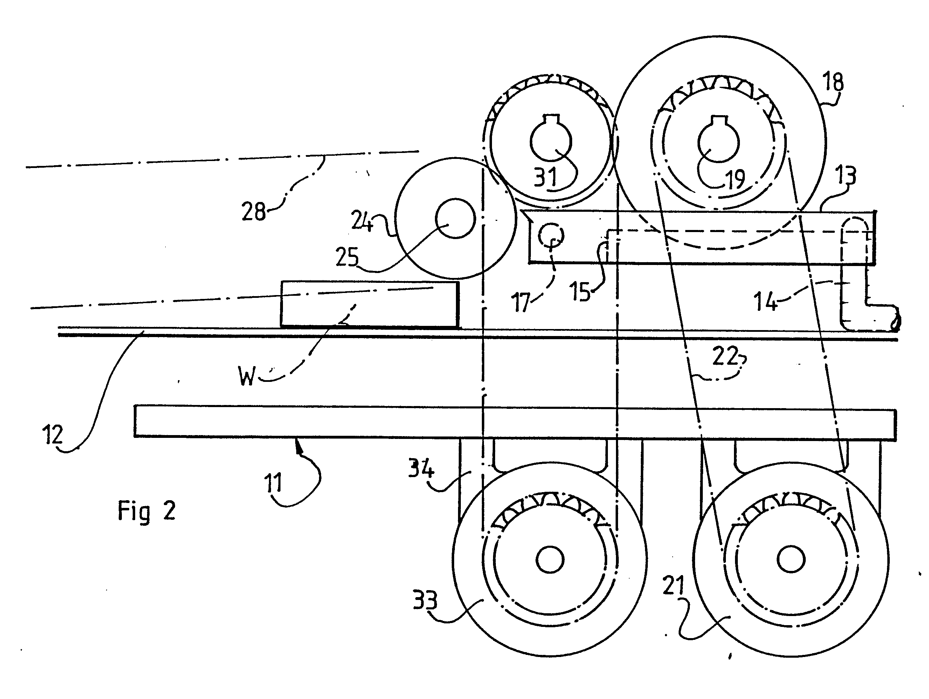

An exemplary embodiment of the invention will now be described with reference to the accompanying drawing, which is of a part of a machine for coating bread, of which Figure 1 is plan view and Figure 2 is a partial side elevation of Figure 1 in the direction of arrow II showing the relative positions particularly of movable elements referred to in connection with Figure 1. A given component is given the same reference numeral in both figures.

Work station 11 is shown positioned to co-operate with a conventional conveyer belt 12. The workstation includes a reservoir 13 into which liquified butter is pumped by way of inlet pipe 14. The reservoir 13 includes a weir 15 so that the height of the free surface 16 of liquid butter in the reservoir is maintained constant. Surplus butter spilling over the weir 15 is returned to the source of the liquified butter by way of drain outlet 17.

First roller 18 is mounted relative to the reservoir 13 so that a portion of the periphery of the roller 18 always lies beneath the free surface 16 of butter in the reservoir 13. The first roller 18 is keyed to shaft 19 which also has keyed to it cog 20 which electric motor 21 drives by way of a toothed belt 22. Shaft 19 is mounted on conventional shaft bearings 23. The driving arrangements for the first roller 18 (the shafts, motor and toothed belt) are offset from the conveyer belt 12 and most components are mounted between and on sideplates A and B to allow ready access for maintenance and cleaning.

Second roller 24 is mounted relative to the conveyer belt 12 so as to deposit liquified butter upon a sequence of substrates, in this case a single bread slice W is shown, passing through the work station on the belt 12. The second roller 24 is keyed to shaft 25 which also has keyed to it cog 26 which is driven by an electric motor (not shown). A second cog 27 keyed to shaft 25 provides a drive by belt 28 to a unit (a hold down belt) located upstream of the work station which needs to be driven at a speed and in a direction related to that of shaft 25. The shaft 25 is mounted on conventional shaft bearings 29.

To enable the first roller 18 and second roller 24 to be optimally located relative, respectively, to reservoir 13 and conveyer belt 12 while allowing controlled transfer of coating material between them there is provided third roller 30. The third roller 30 is keyed to shaft 31 which also has keyed to it cog 32 which is rotated by an electric motor 33 acting by way of a toothed belt 34. Shaft 31 is mounted on conventional shaft bearings 35.

The speeds of the rotatable members 18, 24, 30 both in absolute terms and relative to each other and to the belt 12 are governed by conventional motor regulating systems.

In use the conveyer belt 12 is operated to present a succession of bread slices to the work station 11 where reservoir 13 is fed liquified butter by way of inlet 14. First roller 18 is rotated in the direction of the arrow shown in Figure 2 to entrain butter from the reservoir 13 and carry it over to roller 30 (rotating in the same sense as first roller 18) which in turn carries the butter over to second roller 24 (also rotating in the same sense as first roller 18 from where the butter is deposited upon each slice of bread passed beneath it on the conveyer belt 12.

The liquified butter fed to reservoir 13 includes particulate material in the form of herbs and garlic. The method of entraining the resulting homogeneous liquid butter and particulate material ensures that a relatively uniform consistency of mixture is deposited upon the bread conveyed past the workstation. Control of the amount of coating per bread slice is achieved by periodically checking the weight of a slice after coating by comparison with the weight before (given a consistent weight of bread slice). In the event an increase in coating amount is required the speed of rotation of the first roller 18 is increased to increase the entrainment of butter swept over to the roller 30. To reduce the amount deposited on each slice the speed of the roller 18 is reduced.

Though the exemplary embodiment refers to a process involving the deposition of liquified butter on bread slices it will be apparent that the method and apparatus described can be used to meet a wide variety of coating requirements with a range of materials. In particular the method and arrangement provide the ability to utilise heterogeneous liquid materials and to readily regulate the coating per unit typically without complex control arrangements.

## Claims

1 A method of coating an edible substrate material with a deposition of secondary material characterised by the steps of:

a) traversing the substrate (W), such as by means of a conveyer (12), past a workstation (11);

b) providing a reservoir (13) of liquid secondary material;

c) maintaining a constant head (15) of secondary material in the reservoir (13);

d) drawing secondary material from the reservoir (13) by means of a first rotating member (18);

e) transferring material from the first rotating member (18) to a second rotating member (24) at the workstation (11);

f) juxtaposing the second rotating member (24) with a substrate (W) as it passes the workstation (11) so as to cause the transfer of secondary material from the second rotating member (24) to the substrate (W).

2 A method as claimed in Claim 1 characterised in that the step of transferring material from the first rotating member (18) to a second rotating member (24) is undertaken by way of at least one further rotating member (30).

3 A workstation for use in conjunction with a conveyer to enable an edible substrate presented to the workstation by way of the conveyer to be coated with a deposition of a secondary material characterised by:

a) a reservoir (13) for liquid secondary material;

b) a level regulator (15) for maintaining a constant head of the secondary material in the reservoir (13);

c) a first rotatable member (18) juxtaposed with the reservoir (13) so as to be able to entrain secondary material therefrom;

d) a second rotatable member (24) adapted to receive secondary material initially entrained by the first member (18);

e) the second rotatable member (24) being adapted for juxtaposition with a conveyer (12) so that a substrate (W) in passing the second rotatable member (24) has secondary material transferred to it by way of the second rotating member (24).

4 A workstation as claimed in Claim 3 characterised in that the transfer of secondary material from the first (18) to the second rotatable member (24) is by way of at least one intermediate rotatable member (30) to enable the optimal location firstly of the first such member (18) relative to the reservoir (13) and secondly of the second rotatable member (24) relative to a path of a substrate (W) to receive secondary material from the second rotatable member (24).

5 A workstation as claimed in Claim 2, Claim 3 or Claim 4 characterised by a speed control whereby the linear peripheral speed of the second rotatable member (24) can be varied relative to the linear speed of a substrate (W) passing it between a first value where the linear peripheral speed of the second member (24) is less than that of the linear speed of the substrate (W) and a second value where the linear peripheral speed of the second member (24) is greater than that of the substrate (W).

6 A coating system comprising a conveyer for substrates for coating and a workstation to enable substrates on the conveyer to be coated characterised by a workstation (11) as claimed in any of preceding claims 2 to 5.

Fig 1

EP 0 296 853 A2

Fig 2